# EUROPÄISCHE PATENTANMELDUNG

(11) **EP 4 398 329 A1**
(43) Veröffentlichungstag der Anmeldung: **10.07.2024**
(21) Anmeldenummer: 23204353.9
(22) Anmeldetag: 18.10.2023
(51) Int. Cl.: H01M 4/13, H01M 4/134, H01M 4/38, H01M 4/48, H01M 4/62, H01M 4/66

(54) **BATTERIEELEKTRODE FÜR EINE ELEKTROCHEMISCHE BATTERIEZELLE**

(30) Priorität: 03.01.2023 DE 102023200012
(71) Anmelder: VOLKSWAGEN AG, 38440 Wolfsburg (DE)
(72) Erfinder: Hüsker, Dr. Jessica Maria, 38126 Braunschweig (DE); Yu, Zhihang, 38268 Lengende (DE)

(57) **Zusammenfassung**

Die Erfindung betrifft eine Batterieelektrode (2, 2') für eine elektrochemische Batteriezelle, aufweisend einen metallischen Stromableiter (4) und eine darauf aufgebrachte Primerschicht (6), wobei die Primerschicht (6) ein Leitadditiv (8) und ein elektrochemisch aktives, siliziumbasiertes, Nano-Aktivmaterial (10) aufweist.

## Beschreibung

Die Erfindung betrifft eine Batterieelektrode für eine elektrochemische Batteriezelle, aufweisend einen metallischen Stromableiter und eine darauf aufgebrachte Primer-Beschichtung. Die Erfindung betrifft weiterhin eine elektrochemische Batteriezelle mit einer solchen Batterieelektrode.

Elektrisch beziehungsweise elektromotorisch angetriebene oder antreibbare Kraftfahrzeuge, wie beispielsweise Elektro- oder Hybridfahrzeuge, umfassen in der Regel einen Elektromotor, mit dem eine oder beide Fahrzeugachsen antreibbar sind. Zur Versorgung mit elektrischer Energie ist der Elektromotor üblicherweise an eine fahrzeuginterne (Hochvolt-)Batterie als elektrischen Energiespeicher angeschlossen.

Unter einer insbesondere elektrochemischen Batterie ist hier und im Folgenden insbesondere eine sogenannte sekundäre Batterie (Sekundärbatterie) des Kraftfahrzeugs zu verstehen. Bei einer solchen (sekundären) Fahrzeugbatterie ist eine verbrauchte chemische Energie mittels eines elektrischen (Auf-)Ladevorgangs wiederherstellbar. Derartige Fahrzeugbatterien sind beispielsweise als elektrochemische Akkumulatoren, insbesondere als Lithium-Ionen-Akkumulatoren, ausgeführt.

Zur Erzeugung oder Bereitstellung einer ausreichend hohen Betriebsspannung weisen solche Fahrzeugbatterien typischerweise mindestens ein Batteriemodul (Batteriezellmodul) auf, bei welchem mehrere einzelne Batteriezellen modular verschaltet sind. Alternativ ist ein sogenanntes Cell2Pack-Design möglich, bei welchem die Batteriezellen direkt zu der Fahrzeugbatterie zusammengeschaltet, insbesondere parallelgeschaltet, und nicht vorab zu Modulen zusammengefasst werden.

Die Batteriezellen sind beispielsweise als elektrochemische (Dünn-)Schichtzellen ausgeführt. Die Dünnschichtzellen weisen einen geschichteten Aufbau mit einer Kathodenschicht (Kathode) und mit einer Anodenschicht (Anode) sowie mit einer dazwischen eingebrachten Separatorschicht (Separator) auf. Die Anoden und die Kathoden weisen dabei typischerweise jeweils einen, insbesondere folienartigen, Stromableiter (Stromabnehmer, Stromsammler, Stromkollektor) mit einem darauf aufgebrachten Aktivmaterial (Elektrodenmaterial) auf, in welches Lithium-Ionen interkalieren (einlagern) und aus welchem Lithium-Ionen deinterkalieren (auslagern) können. Diese Bestandteile werden beispielsweise von einem flüssigen Elektrolyten (Flüssigelektrolyt) durchdrungen, welcher eine ionenleitfähige Verbindung der Bestandteile beziehungsweise einen Ladungsausgleich erzeugt. Um die Energiedichte von Lithium-Ionen-Batterien zu erhöhen werden vermehrt siliziumbasierte (Si-basierte) Aktivmaterialien für die Elektrodenschichten, insbesondere für die Anode, eingesetzt.

Weiterhin ist es wünschenswert, dass Lithium-Ionen-Batterien möglichst lange Lebensdauer und eine möglichst hohe Schnelladefähigkeit aufweisen. Um die Haftung der Elektrodenbeschichtung auf dem Stromableiter zu ermöglichen oder zu verbessern, und damit auch die Schnellladefähigkeit zu verbessern, werden insbesondere bei der Anode Kupferfolien als Stromableiter mit so genannten Primerschichten oder Primerbeschichtungen (engl.: Primer interlayer) eingesetzt. Die Primerschichten bestehen üblicher Weise aus leifähigem Kohlenstoff (z.B. einem Leitruß) und einem Binderpolymer, welches die Haftung auf dem Stromableiter ermöglicht. Die Primerschicht weist üblicherweise eine erhöhte Rauhigkeit auf, um die Haftung einer darauf aufgebrachten Aktivmaterialbeschichtung zu verbessern.

Nachteiligerweise reduzieren solche Primerschichten allerdings die Energiedichte der Batteriezelle, weil sie inaktive Materialien enthalten (z.B. Binder) und auch keine Si-basierten Materialien enthält. In der Regel werden Primerschichten daher möglichst dünn, also mit einer möglichst geringen Schichtdicke, aufgetragen, so dass der negative Einfluss auf die Energiedichte reduziert wird.

Der Erfindung liegt die Aufgabe zugrunde, eine besonders geeignete Batterieelektrode für eine elektrochemische Batteriezelle anzugeben. Der Erfindung liegt weiterhin die Aufgabe zugrunde, eine besonders geeignete Batteriezelle anzugeben.

Hinsichtlich der Batterieelektrode wird die Aufgabe mit den Merkmalen des Anspruchs 1 und hinsichtlich der Batteriezelle mit den Merkmalen des Anspruchs 10 erfindungsgemäß gelöst. Vorteilhafte Ausgestaltungen und Weiterbildungen sind Gegenstand der Unteransprüche. Die im Hinblick auf die Batterieelektrode angeführten Vorteile und Ausgestaltungen sind sinngemäß auch auf die Batteriezelle übertragbar und umgekehrt.

Die erfindungsgemäße Batterieelektrode ist für eine elektrochemische Batteriezelle vorgesehen sowie dafür geeignet und eingerichtet. Die Batterieelektrode weist hierbei einen metallischen, insbesondere folienartigen, Stromableiter und eine darauf aufgebrachte Primerschicht auf. Die Primerschicht weist als Bestandteile ein Leitadditiv und ein elektrochemisch aktives, siliziumbasiertes, Nano-Aktivmaterial auf. Dadurch ist eine besonders geeignete Batterieelektrode realisiert.

Erfindungsgemäß sind somit Si-basierte Nano-Aktivmaterialien zusätzlich in die Primerschicht mit eingebracht. Diese Si-basierten Nano-Aktivmaterialien sind elektrochemisch aktiv und tragen somit zur Kapazität der Batterieelektrode bei, wodurch eine Energiedichte der Batteriezelle erhöht wird. Da die Si-basierten Nano-Aktivmaterialien direkt in die Primerschicht eingebracht werden ist außerdem eine gute Haftung der Si-basierten Aktivmaterialien über die Lebensdauer der Batteriezelle gewährleistet.

Unter einem Nano-Aktivmaterial ist hierbei ein Aktivmaterial in Form von nanoskopischen Materialien oder Teilchen zu verstehen. Das Nano-Aktivmaterial ist beispielsweise durch Nanopartikel oder Nanoröhrchen (Nanotubes) oder Nanodrähte (Nanowire) oder Mischungen hieraus gebildet.

Bei der Batterieelektrode handelt es sich insbesondere um eine Anode, wobei unter einem Nano-Aktivmaterial entsprechend ein Nano-Anodenaktivmaterial zu verstehen ist. Als Leitadditiv werden typische in Batterieanoden oder Primerschichten verwendete Leitadditive, wie beispielsweise Leitruß, Carbon Black, Ketjen Black, Nanotubes, etc. eingesetzt.

Die Primerschicht kann hierbei unbeschichtet sein. Mit anderen Worten kann die Batterieelektrode durch eine geprimten Stromableiter gebildet sein. Vorzugsweise ist auf die Primerschicht jedoch eine Aktivmaterialschicht, insbesondere eine siliziumbasierte Aktivmaterialschicht, aufgetragen. Auf die Primerschicht ist also beispielsweise ein Anodenaktivmaterial aufgetragen, so dass die Batterieelektrode als Anode in einer Batteriezelle verwendet werden kann. Durch die Primerschicht ist die Leitfähigkeit und Haftfestigkeit der Paste beziehungsweise der Aktivmaterialschicht an der Batterieelektrode verbessert.

Selbst mit beigefügtem Nano-Aktivmaterial weist die Primerschicht noch einen geringen Einfluss auf die Energiedichte der Batteriezelle auf. Um diesen Einfluss weiter zu reduzieren weist die Primerschicht in einer vorteilhaften Ausführung lediglich eine Schichtdicke zwischen 100 nm (Nanometer) bis 5 µm (Mikrometer) auf. Insbesondere ist eine Schichtdicke zwischen 500 nm und 1,5 µm vorgesehen.

In einer geeigneten Ausgestaltung weist das Nano-Aktivmaterial, also die nanoskopischen Materialien oder Teilchen, eine durchschnittliche Größe zwischen 50 nm bis 500 nm, insbesondere zwischen 50 nm und 250 nm, auf. Mit anderen Worten weist die Primerschicht eine Schichtdicke von wenigen Nano-Aktivmateriallagen bis hin zu einer Monolage auf. Dadurch wird die Lebensdauer der Batterieelektrode vorteilhaft verlängert, da somit ein sogenanntes Particle Cracking und Particle Detachment vermieden wird. Weiterhin wird somit auch eine Bildung von ungewünschten Zwischenphasen (SEI) vorteilhaft vermieden.

In einer denkbaren Ausgestaltung ist das Nano-Aktivmaterial reines Silizium (Si), ein Siliziumoxid (SiOx), oder eine Siliziumlegierung (Si-Alloy). Beispielsweise ist das Nano-Aktivmaterial durch Si-Nanopartikel, Si-Nanoröhrchen, Si-Nanodrähte, oder durch mit Lithium (Li) oder mit Magnesium (Mg) dotierte SiOx-Nanomaterialien gebildet.

In einer zweckmäßigen Weiterbildung weist die Primerschicht ein auf die Gewichtsprozente (Gew.-%, engl.: wt%) von Leitadditiven zu Nano-Aktivmaterial bezogenes Verhältnis zwischen 99:1 und 1:99 auf. Vorzugsweise ist das Gewichtsprozent-Verhältnis der Leitadditive zu dem Nano-Aktivmaterial zwischen 75:25 und 50:50 dimensioniert.

Die Primerschicht kann binderlos, also ohne einen Binder, ausgeführt sein. Als Beschichtungsverfahren für eine solche binderlose Primerschicht wird beispielsweise chemische Gasphasenabscheidung (engl.: Chemical Vapor Deposition, CVD), physikalische Gasphasenabscheidung (engl.: Physical Vapor Deposition, PVD), Sputtern, oder Atomlagendeposition (engl.: Atomic Layer Deposition, ALD) verwendet.

Die Primerschicht kann jedoch auch mit einem zusätzlichen Binder ausgeführt sein. In einer solchen Ausführung weist die Primerschicht einen Binderanteil zwischen 2 Gew.-% bis 40 Gew.-% auf. Als Binder werden hierbei beispielsweise typische in Batterieanoden oder Primerschichten bekannte Polymerbinder (z.B. CMC, SBR, PAA, PVdF, PTFE...) verwendet. Für eine Primerschicht mit Binder kann als Beschichtungsverfahren beispielsweise eine Schlitzdüsenbeschichtung (engl.: slot-die coating), eine Rakelbeschichtung (engl.: doctor blade coating), oder eine Ausnutzung von Selbstorganisation (engl.: self assembly) von Partikelstrukturen (superstructures) während des Mischprozesses verwendet werden. Der Beschichtungsprozess kann hierbei wasserbasiert oder lösungsmittelbasiert durchgeführt werden. Alternativ ist auch ein Trockenbeschichtungsverfahren denkbar.

In einer bevorzugten Ausgestaltung ist der Stromableiter als eine Kupferfolie ausgeführt. Vorzugsweise weist der Stromableiter beziehungsweise die Kupferfolie eine Schichtdicke (Foliendicke) zwischen 1 µm und 20 µm, insbesondere zwischen 4,5 µm und 10 µm, beispielsweise 6 µm, auf.

Die erfindungsgemäße elektrochemische Batteriezelle weist eine vorstehend beschriebene Batterieelektrode auf. Die Batterieelektrode ist hierbei beispielsweise als eine Anode in einem Zellstapel der Batteriezelle aufgenommen. Dadurch ist eine besonders geeignete Batteriezelle mit einer besonders hohen Energiedichte gewährleistet.

Nachfolgend ist ein Ausführungsbeispiel der Erfindung anhand einer Zeichnung näher erläutert. Darin zeigen in schematischen und vereinfachten Darstellungen:
- Fig. 1: eine Batterieelektrode mit einem geprimten Stromableiter, und
- Fig. 2: eine als Anode ausgeführte Batterieelektrode.

Einander entsprechende Teile und Größen sind in allen Figuren stets mit den gleichen Bezugszeichen versehen.

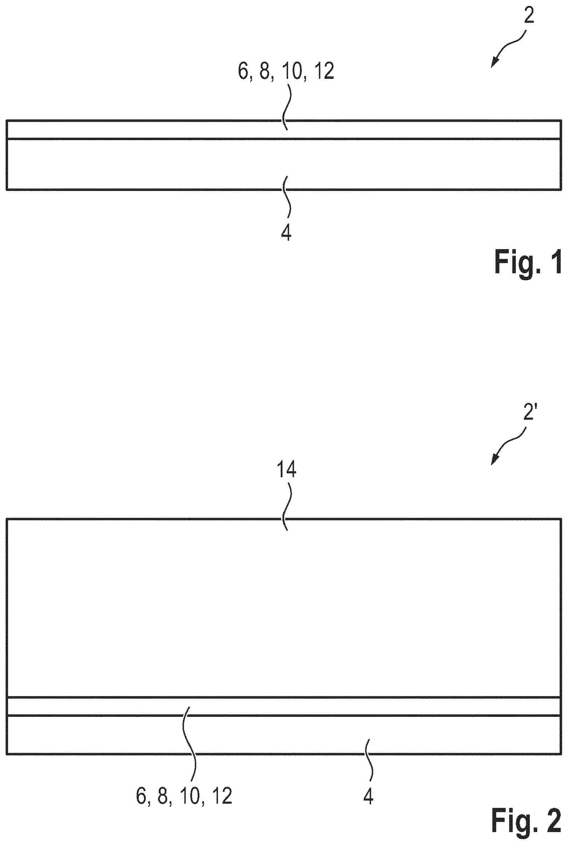

Die in der Figur 1 dargestellte Batterieelektrode 2 ist für eine nicht näher gezeigte elektrochemische Batteriezelle vorgesehen sowie dafür geeignet und eingerichtet. Die Batterieelektrode 2 weist hierbei einen metallischen, insbesondere folienartigen, Stromableiter 4 und eine darauf aufgebrachte Primerschicht 6 auf.

Der Stromableiter 4 ist vorzugsweise als eine Kupferfolie ausgeführt. Der Stromableiter 4 weist hierbei eine Schichtdicke (Foliendicke) zwischen 1 µm und 20 µm, insbesondere zwischen 4,5 µm und 10 µm, beispielsweise 6 µm, auf.

Die Primerschicht 6 weist eine Schichtdicke zwischen 100 nm bis 5 µm auf. Insbesondere ist die Schichtdicke zwischen 500 nm und 1,5 µm dimensioniert. Die Primerschicht 6 weist ein Leitadditiv 8 und ein elektrochemisch aktives, siliziumbasiertes, Nano-Aktivmaterial 10 auf. Das Leitadditiv 8 ist beispielsweise Leitruß, Carbon Black, Ketjen Black, Nanotubes, oder Mischungen hieraus. Das Nano-Aktivmaterial 10 ist beispielsweise reines Silizium (Si), ein Siliziumoxid (SiOx), oder eine Siliziumlegierung (Si-Alloy). Beispielsweise ist das Nano-Aktivmaterial durch Si-Nanopartikel, Si-Nanoröhrchen, Si-Nanodrähte, oder durch mit Lithium (Li) oder mit Magnesium (Mg) dotierte SiOx-Nanomaterialien oder Mischungen hieraus gebildet. Das Nano-Aktivmaterial 10 weist hierbei eine durchschnittliche Größe zwischen 50 nm bis 500 nm, insbesondere zwischen 50 nm und 250 nm, auf.

Das (Gewichtsprozent-)Verhältnis von Leitadditiven 8 zu Nano-Aktivmaterial 10 in der Primerschicht 6 beträgt zwischen 99:1 und 1:99. Vorzugsweise ist das Verhältnis der Leitadditive 8 zu dem Nano-Aktivmaterial 10 zwischen 75:25 und 50:50 dimensioniert.

Die Primerschicht 6 kann binderlos, also ohne einen Binder 12, ausgeführt sein. Als Beschichtungsverfahren für eine solche binderlose Primerschicht 6 wird beispielsweise chemische Gasphasen-abscheidung (engl.: Chemical Vapor Deposition, CVD), physikalische Gasphasenabscheidung (engl.: Physical Vapor Deposition, PVD), Sputtern, oder Atomlagendeposition (engl.: Atomic Layer Deposition, ALD) verwendet.

Die Primerschicht 6 kann jedoch optional auch mit einem Binder 12 ausgeführt sein. In einer solchen Ausführung weist die Primerschicht 6 einen Binderanteil zwischen 2 Gew.-% bis 40 Gew.-% auf. Als Binder 12 werden hierbei beispielsweise typische in Batterieanoden oder Primerschichten bekannte Polymerbinder (z.B. CMC, SBR, PAA, PVdF, PTFE...) oder Mischungen verwendet. Für eine Primerschicht 6 mit Binder 12 kann als Beschichtungsverfahren beispielsweise eine Schlitzdüsenbeschichtung (engl.: slot-die coating), eine Rakelbeschichtung (engl.: doctor blade coating), oder eine Ausnutzung von Selbstorganisation (engl.: self assembly) von Partikelstrukturen (superstructures) während des Mischprozesses verwendet werden. Der Beschichtungsprozess kann hierbei wasserbasiert oder lösungsmittelbasiert durchgeführt werden. Alternativ ist auch ein Trockenbeschichtungsverfahren denkbar.

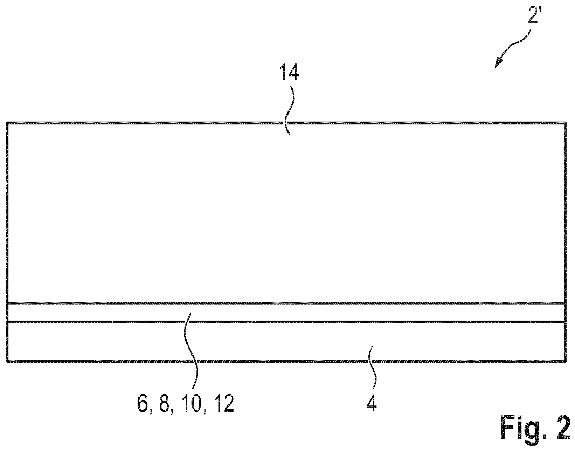

Die Fig. 2 zeigt eine als Anode ausgeführte Batterieelektrode 2`, bei welcher die Primerschicht 6 als Haftschicht für eine siliziumbasierte Aktivmaterialschicht 14 wirkt. Auf die Primerschicht 6 ist also ein Anodenaktivmaterial als Aktivmaterialschicht 14 aufgetragen, so dass die Batterieelektrode 2' als Anode in einer Batteriezelle verwendet werden kann.

Die beanspruchte Erfindung ist nicht auf die vorstehend beschriebenen Ausführungsbeispiele beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit den verschiedenen Ausführungsbeispielen beschriebenen Einzelmerkmale im Rahmen der offenbarten Ansprüche auch auf andere Weise kombinierbar, ohne den Gegenstand der beanspruchten Erfindung zu verlassen.

### Bezugszeichenliste

- 2, 2': Batterieelektrode
- 4: Stromableiter
- 6: Primerschicht
- 8: Leitadditiv
- 10: Nano-Aktivmaterial
- 12: Binder
- 14: Aktivmaterialschicht

## Patentansprüche

1. Batterieelektrode (2, 2`) für eine elektrochemische Batteriezelle, aufweisend einen metallischen Stromableiter (4) und eine darauf aufgebrachte Primerschicht (6), wobei die Primerschicht (6) ein Leitadditiv (8) und ein elektrochemisch aktives, siliziumbasiertes, Nano-Aktivmaterial (10) aufweist.

2. Batterieelektrode (2`) nach Anspruch 1,
**dadurch gekennzeichnet,**
**dass** auf die Primerschicht (6) eine siliziumbasierte Aktivmaterialschicht (14) aufgetragen ist.

3. Batterieelektrode (2, 2`) nach Anspruch 1 oder 2,
**dadurch gekennzeichnet,**
**dass** die Primerschicht (6) eine Schichtdicke zwischen 100 nm bis 5 µm, insbesondere zwischen 500 nm bis 1.5 µm, aufweist.

4. Batterieelektrode (2, 2`) nach einem der Ansprüche 1 bis 3,
**dadurch gekennzeichnet,**
**dass** das Nano-Aktivmaterial (10) eine durchschnittliche Größe zwischen 50 nm bis 500 nm, insbesondere zwischen 50 nm und 250 nm, aufweisen.

5. Batterieelektrode (2, 2`) nach einem der Ansprüche 1 bis 4,
**dadurch gekennzeichnet,**
**dass** das Nano-Aktivmaterial (10) reines Silizium, ein Siliziumoxid, oder eine Siliziumlegierung ist.

6. Batterieelektrode (2, 2`) nach einem der Ansprüche 1 bis 5,
**dadurch gekennzeichnet,**
**dass** die Primerschicht (6) ein Gewichtsprozent-Verhältnis der Leitadditive (8) zu Nano-Aktivmaterial (10) zwischen 99:1 und 1:99, insbesondere zwischen 75:20 und 50:50, aufweist.

7. Batterieelektrode (2, 2`) nach einem der Ansprüche 1 bis 6,
**dadurch gekennzeichnet,**
**dass** die Primerschicht (6) zusätzlich einen Binder (12) mit 2 Gew.-% bis 40 Gew.% aufweist.

8. Batterieelektrode (2, 2`) nach einem der Ansprüche 1 bis 7,
**dadurch gekennzeichnet,**
**dass** der Stromableiter (4) als eine Kupferfolie ausgeführt ist.

9. Batterieelektrode (2, 2`) nach einem der Ansprüche 1 bis 8,
**dadurch gekennzeichnet,**
**dass** der Stromableiter (4) eine Schichtdicke zwischen 1 µm und 20 µm, insbesondere zwischen 4,5 µm und 10 µm, aufweist.

10. Elektrochemische Batteriezelle, aufweisend eine Batterieelektrode (2, 2`) nach einem der Ansprüche 1 bis 9.
